# EUROPÄISCHE PATENTSCHRIFT

(11) **EP 3 229 505 B1**
(45) Veröffentlichungstag und Bekanntmachung des Hinweises auf die Patenterteilung: **01.07.2020**
(21) Anmeldenummer: 17162322.6
(22) Anmeldetag: 22.03.2017
(51) Int. Cl.: H04W 4/14, H04W 4/90, H04W 76/50, H04W 4/12, H04W 4/20

(54) **ÜBERTRAGEN VON INFORMATIONEN BEZÜGLICH EINES NOTFALLS ZWISCHEN EINEM MOBILEN ENDGERÄT UND EINER NOTFALLLEITSTELLE**
TRANSMISSION OF INFORMATION RELATED TO AN EMERGENCY BETWEEN A MOBILE TERMINAL AND AN EMERGENCY CONTROL ROOM
TRANSMISSION D'INFORMATIONS RELATIVES À UNE URGENCE ENTRE UN TERMINAL MOBILE ET UN POSTE DE CONDUITE DE SECOURS

(30) Priorität: 07.04.2016 DE 102016205835
(43) Veröffentlichungstag der Anmeldung: 11.10.2017
(73) Patentinhaber: VOLKSWAGEN AKTIENGESELLSCHAFT, 38440 Wolfsburg (DE)
(72) Erfinder: Khan, Muhammad Farooq, 47743 Moers (DE)

(56) Entgegenhaltungen:
- KR-A- 20030 037 175
- US-A1- 2009 311 988
- US-A1- 2014 295 885
- US-B2- 9 049 584
- QUALCOMM: "VoIP Emergency Call Support (S2-051950)", 3RD GENERATION PARTNERSHIP PROJECT (3GPP) DRAFT, 31. August 2005 (2005-08-31), XP050432274, [gefunden am 2005-08-31]

## Beschreibung

Die vorliegende Erfindung bezieht sich auf ein Verfahren zum Übertragen von Informationen bezüglich eines Notfalls zwischen einem mobilen Endgerät und einer Notfallleitstelle gemäß Anspruch 1.

Nach Beschluss der Europäischen Kommission sollen ab 2018 alle neuen Modelle von Personenkraftwagen (Pkw) und leichter Nutzfahrzeuge mit dem Notrufsystem eCall (Kurzform für emergency call, aus dem Englischen für Notruf) verpflichtend ausgestattet werden. eCall soll bei Unfällen von Kraftfahrzeugen (Kfz) und in Notfällen eine präzise und automatische Alarmierung von Rettungskräften ermöglichen. So sollen Helfer schneller an den Unfallort gelangen und mit genaueren Informationen über die Lage vor Ort versorgt sein, um den Notfallumständen entsprechende Rettungsmaßen ergreifen zu können. Durch die automatische Alarmierung der Rettungskräfte über die einheitliche europäische Notrufnummer 112 kann Hilfe gerufen werden, selbst wenn die Betroffenen bewusstlos beziehungsweise nicht mehr in der Lage sind, einen Notruf selbst zu tätigen. Daneben soll auch ein manueller, das heißt, ein durch einen Fahrzeuginsassen getätigter Notruf, zum Beispiel über eine Notruftaste, möglich sein.

Ein Notruf nach dem eCall-Standard soll im Wesentlichen in zwei Phasen gegliedert sein. In einer ersten Phase soll ein sogenannter minimaler Datensatz (englisch Minimum Set of Data, MSD) von einem Kfz, in dem der Notruf ausgelöst wurde, zu einer zuständigen Notfallleitstelle, im eCall-Standard als öffentliche Sicherheitsantwortstelle (englisch Public Safety Answering Point, PSAP) bezeichnet, übertragen werden. Der MSD soll Informationen bezüglich des Notfalles enthalten, wie zum Beispiel den Notfallort, beispielsweise beschrieben durch dessen geographische Koordinaten, den Notfallzeitpunkt, eine Fahrrichtung des Kfz, eine Fahrzeug-Identifizierungsnummer (englisch Vehicle Identification Number, VIN) des Kfz, eine Service-Anbieter-Identifizierungsnummer (englisch Service Provider Identification Number, SPIN), zum Beispiel eines Mobilfunkanbieters einer für den Notruf genutzten Mobilfunkverbindung, sowie einen Kennzeichner, ob der Notruf manuell oder automatisch ausgelöst wurde.

Bei einer zweiten Phase eines Notrufes nach dem eCall-Standard handelt es sich um einen Sprechmodus, während dessen die Fahrzeuginsassen mit einem Einsatzsachbearbeiter der Notfallleistelle bidirektional, ähnlich wie bei einem Telefonat, kommunizieren können.

Nach dem eCall-Standard wird ein vom Kfz zur Durchführung des Notrufs umfasstes System als In-Vehikel-System (englisch In-Vehicle-System, IVS) bezeichnet. Das IVS umfasst dabei zum Beispiel einen Empfänger eines globalen Positionierungssystems (kurz GPS-Empfänger) und Sensoren, wie zum Beispiel Beschleunigungs-, Aufprall- oder Airbag-Sensoren, welche einen Notruf automatisch auslösen können. Airbag-Sensoren können zum Beispiel dann ansprechen, wenn sich ein Airbag des Kfz öffnet. Ferner kann das IVS eine Notruftaste, um einen Notruf manuell zu tätigen, und eine Kommunikationsschnittstelle, welche dazu ausgebildet sein kann, zum Beispiel über ein Mobilfunknetz eine Kommunikation mit der Notfallleitstelle zu ermöglichen, umfassen.

Dem eCall-Standard folgend, soll ein Datenaustausch während des Notrufs, insbesondere ein Anfordern des MSD von der Notfallleitstelle und ein Versenden des MSD von dem IVS, über einen Sprachkanal eines Mobilfunksystems erfolgen, da solche Sprachkanäle in sämtlichen Mobilfunksystemen, wie zum Beispiel in dem Globalen System für mobile Kommunikation (englisch Global System for Mobile Communications, GSM), dem Universalen Mobilen Telekommunikationssystem (englisch Universal Mobile Telecommunication System, UMTS), dem System der langfristigen Weiterentwicklung (englisch Long Term Evolution, LTE) oder in einem Mobilfunksystem der 5. Generation (5G), verfügbar sein können. Somit kann ohne Modifikation von Mobilfunksystemen beziehungsweise deren zellulärer Mobilfunkinfrastruktur und unabhängig von dem für den Notruf verwendeten Mobilfunksystem der Datenaustausch während des Notrufs erfolgen.

Auf der anderen Seite ist ein Sprachkanal vornehmlich für die Übertragung von Sprachsignalen geeignet. Oft werden Signale zur Übertragung in Sprachkanälen mit einem Sprach-Codec, das heißt, nach einem Verfahren zur Kodierung und Dekodierung von Sprache, verarbeitet. Vorteilhaft an einem Sprach-Codec kann sein, dass dieser das bei der Übertragung eines Sprachsignals aufkommende Datenvolumen reduzieren kann und somit eine effektive Datenrate einer Sprachübertragung erhöhen kann. Beispiele für Sprach-Codecs sind das Verfahren der Code angeregten linearen Vorhersage (englisch Code-Excited Linear Prediction, CELP), das Verfahren der fortgeschrittenen Multi-Band Anregung (englisch Advanced Multi-Band Excitation, AMBE) sowie vielzählige Verfahren der Internationalen Fernmeldeunion (englisch International Telecommunication Union, ITU). Dabei sind Sprach-Codecs

### Neue Beschreibungsseiten

insbesondere auf Eigenschaften von Sprachsignalen zugeschnitten, zum Beispiel auf eine hohe Korrelation innerhalb des Sprachsignals, mit anderen Worten, eine Ähnlichkeit von Abtastwerten des Sprachsignals zeitlich benachbarter Abtastpunkte, auf Pausen zwischen den gesprochenen Wörtern, oder auf den wesentlichen spektralen Anteil eines Sprachsignales zwischen ungefähr 300 Hertz und 3400 Hertz. Zur Kodierung von Datensignalen, wie zum Beispiel des MSD, sind Sprach-Codecs oft ungeeignet, da sich Datensignale zum Beispiel in den vorher genannten Eigenschaften deutlich von Sprachsignalen unterscheiden können. Folglich können bei Anwendung von Sprach-Codecs auf Datensignale, diese häufig zu nichtlinearen Verzerrungen und zu einer unvollständigen Übertragung der Datensignale führen. Das Datensignal kann dann am Empfänger oft nicht mehr rekonstruiert werden, das heißt, nicht mehr lesbar sein. Dies kann besonders in einem Notfall bei der Übertragung des MSD nachteilig sein. Zum Beispiel kann eine häufige Wiederholung der Übertragung erforderlich werden.

Einige alternative Konzepte zum Übertragen von Informationen bezüglich eines Notfalls zwischen einem mobilen Endgerät und einer Notfallleitstelle werden beispielsweise in den US 2014/295885 A1 oder US 2009/311988 A1 beschrieben. Zudem wird in US 9,674,683 B2 ein System beschrieben, das von einem Fahrzeug genutzt werden kann, um einer Notfalltelefonzentrale Informationen über einen Unfall bereitzustellen. Dabei wird eine Sprachverbindung zu der Notfalltelefonzentrale aufgebaut und zuerst die Position des Fahrzeugs über einen Data-over-Voice-Codec übertragen, bevor der Fahrer zu dem menschlichen Operator durchgestellt wird.

Es besteht ein Bedarf, die vorliegenden Verfahren zum Übertragen von Informationen bezüglich eines Notfalls zwischen einem mobilen Endgerät und einer Notfallleitstelle zu verbessern. Diesem Bedarf wird durch die Verfahren und Vorrichtungen gemäß der unabhängigen Ansprüche Rechnung getragen. Es sei dabei darauf hingewiesen, dass, auch wenn die hier offenbarten Verfahren und Vorrichtungen im Zusammenhang von Notrufen von Kfz beispielhaft dargestellt werden, nicht auf das Übertragen von Informationen bezüglich eines Notfalls in oder bei einem Kfz beschränkt sind, sondern sich auf andere Zusammenhänge übertragen lassen. Zum Beispiel lassen sich die hier vorgestellten Verfahren und Vorrichtungen auch auf einen Notruf eines Fußgängers, eines Fahrradfahrers, eines Schiffes oder aus einem Gebäude übertragen.

Eine Verbesserung der vorliegenden Verfahren zum Übertragen von Informationen bezüglich eines Notfalls zwischen einem mobilen Endgerät und einer Notfallleitstelle können Ausführungsbeispiele dieser Erfindung wie folgt erreichen:
Über einen Kontrollkanal eines Mobilfunksystems werden erste Informationen bezüglich des Notfalls zwischen dem mobilen Endgerät und der Notfallleitstelle kommuniziert. Außerdem werden über einen Sprachkanal des Mobilfunksystems zweite Informationen zwischen dem mobilen Endgerät und der Notfallleitstelle kommuniziert. Dabei werden die ersten Informationen, über den Kontrollkanal, zwischen dem mobilen Endgerät und der Notfallleitstelle kommuniziert, bevor der Sprachkanal aufgebaut wird. Die ersten Informationen werden in einem sowohl zu dem mobilen Endgerät als auch zu der Notfallleitstelle entfernt gelegenen Datenverwaltungssystem gespeichert, bevor der Sprachkanal aufgebaut wird. Die Notfallleitstelle kann dann die ersten Informationen aus dem Datenverwaltungssystem abrufen, nachdem der Sprachkanal aufgebaut wurde. Dabei werden die ersten Informationen von dem mobilen Endgerät zu der Notfallleitstelle übermittelt. Das Verfahren umfasst ferner, zur Fehlerbehandlung, ein Überprüfen, seitens der Notfallleitstelle, ob die ersten Informationen fehlerfrei übermittelt wurden. Im Falle einer fehlerfreien Übermittlung der ersten Informationen, werden die zweiten Informationen in Form von Sprache kommuniziert. Im Falle einer fehlerbehafteten Übermittlung der ersten Informationen umfassen die zweiten Informationen ein Anforderungssignal, welches von der Notfallleitstelle zu dem mobilen Endgerät übermittelt wird und dazu ausgebildet ist, das mobile Endgerät zu veranlassen, die ersten Informationen nochmals über den Sprachkanal zu übermitteln.

Bei dem mobilen Endgerät kann es sich zum Beispiel um ein IVS eines Kfz, ein Mobiltelefon, ein Telefon nach dem DECT-Standard (kurz für Digitale Verbesserte Kabellose Telekommunikation, englisch Digital Enhanced Cordless Telecommunications), ein öffentliches Notruftelefon oder um ein Hausnotruftelefon handeln. Bei der Notfallleitstelle kann es sich zum Beispiel um eine Leitstelle zur Entgegennahme von Notrufen über den Euronotruf 112 oder den nordamerikanischen Notruf 911, wie eine Rettungsleitstelle oder eine Einsatzzentrale der Feuerwehr, der Polizei oder des Katastrophenschutzes, handeln. Darüber hinaus kann es sich bei der Notfallleitstelle auch um eine Leitstelle eines Automobilclubs, wie zum Beispiel die Leitstelle der Luftrettung des Allgemeinen Deutschen Automobil-Clubs (ADAC), oder um eine Leitstelle eines Telematikdienst-Anbieters (englisch Telematics Service Provider, TSP) handeln. TSP sind zum Beispiel Unternehmen, die für Kfz Telekommunikations- und Informationsdienste anbieten. Beispielsweise versorgen Sie Kfz mit Verkehrsinformationen oder können bei technischen Störungen am Kfz Ferndiagnosen durchführen. Auch können TSP zum Beispiel über eigene Notfallleitstellen und/oder Telefon- und Vermittlungszentralen verfügen, um Notrufe entgegenzunehmen oder um Notrufe an öffentliche Notfallleitstellen (im Falle von eCall an ein PSAP) weiterzuleiten. Ferner können Notrufe von einer öffentlichen Notfallleitstelle beziehungsweise von einem PSAP auch an einen TSP vermittelt werden. Notfallleitstellen von TSP sind auch als private Notfall-Callcenter (englisch Private Emergency Call Center, Private ECC) bekannt.

In einigen Ausführungsbeispielen können der Kontrollkanal und der Sprachkanal unterschiedliche logische Kanäle des Mobilfunksystems umfassen. Logische Kanäle können sich wiederum voneinander durch die Art der Informationen, welche über sie übertragen werden, unterscheiden. So kann zum Beispiel eine erste Art von logischen Kanälen dazu ausgebildet sein, Signalisierungs- und Steuerungsinformationen des Mobilfunksystems zu übertragen. Eine zweite Art von logischen Kanälen kann zum Beispiel dazu ausgebildet sein, Nutzdaten, wie zum Beispiel Sprache, Texte, Zeichen, Bilder und/oder Töne, zu übertragen. Bei der zweiten Art von logischen Kanälen spricht man auch von Verkehrskanälen (englisch Traffic Channels).

In einigen Ausführungsbeispielen kann zum Beispiel der Kontrollkanal einen logischen Kanal der ersten Art, das heißt, einen logischen Kanal zur Übertragung von Signalisierungs- und Steuerungsinformationen, umfassen, während der Sprachkanal einen logischen Kanal der zweiten Art, das heißt, einen logischen Kanal zur Übertragung von Nutzdaten, umfassen kann.

Logische Kanäle der ersten Art, das heißt, logische Kanäle zur Übertragung von Signalisierungs- und Steuerungsinformationen, können sich voneinander unterscheiden, ob sie in einem Mobilfunknetz gemeinsam von zum Beispiel mehreren Endgeräten genutzt werden, sogenannte Gemeinsame-Kanäle (englisch Common Channels), oder ob sie einem bestimmten mobilen Endgerät beziehungsweise einer bestimmten Verbindung von einem mobilen Endgerät zu einem Netzelement, wie einer Basisstation, zugeordnet sind, sogenannte Dedizierte-Kanäle (englisch Dedicated Channels). Gemeinsame-Kanäle können zum Beispiel allgemeine Signalisierungs- und Steuerungsinformationen des Mobilfunknetzes übertragen, zum Beispiel Informationen zur Identifizierung des Mobilfunknetzes, zur Identifizierung einer Mobilfunkzelle, oder zum Ausweisen von Mobilfunkressourcen, wie zum Beispiel von Frequenzkanälen oder Zeitschlitzen. Dedizierte-Kanäle können hingegen der Steuerung und Signalisierung einer bestimmten Telekommunikationsverbindung innerhalb des Mobilfunknetzes dienen, insbesondere können sie dem Aufbau, dem Aufrechterhalten und dem Beenden einer Telekommunikationsverbindung dienen.

In manchen möglichen Implementierungen kann der Kontrollkanal einen Dedizierten-Kanal umfassen. Zusätzlich oder alternativ kann in manchen Ausführungsbeispielen der Kontrollkanal einen Gemeinsamen-Kanal umfassen.

Unterschiedliche logische Kanäle beziehungsweise der Kontrollkanal und der Sprachkanal können in manchen Ausführungsbeispielen auf unterschiedliche Telekommunikationsressourcen, wie unterschiedliche Frequenzkanäle, zum Beispiel bei einem Frequenz-Vielfach-Zugriffsverfahren (englisch Frequency Division Multiple Access, FDMA), unterschiedliche wiederkehrende Zeitschlitze, zum Beispiel bei einem Zeit-Vielfach-Zugriffsverfahren (englisch Time Division Multiple Access, TDMA) und/oder unterschiedliche Spreizcodes, zum Beispiel bei einem Codemultiplexverfahren (englisch Code Division Multiple Access, CDMA), zugreifen, oder sie können einige Telekommunikationsressourcen gemeinsam nutzen und andere nur für sich in Anspruch nehmen.

Beispielweise können der Kontrollkanal und der Sprachkanal in machen Ausführungsbeispielen den gleichen Frequenzkanal, jedoch einen unterschiedlichen Zeitschlitz zur Übertragung nutzen. Zum Beispiel kann der Kontrollkanal einen ersten Frequenzkanal und einen ersten wiederkehrenden Zeitschlitz und der Sprachkanal den ersten Frequenzkanal und einen zweiten wiederkehrenden Zeitschlitz zur Übertragung von Informationen nutzen.

In zumindest manchen Implementierungsformen können der Kontrollkanal und der Sprachkanal die gleichen Telekommunikationsressourcen nutzen. Zum Beispiel können der Kontrollkanal und der Sprachkanal einen gleichen Frequenzkanal und einen gleichen wiederkehrenden Zeitschlitz zur Übertragung von Informationen nutzen. Dabei können zum Beispiel der Kontrollkanal und der Sprachkanal abwechselnd den wiederkehrenden Zeitschlitz nutzen. Darüber hinaus können in manchen Ausführungsbeispielen der Kontrollkanal und der Sprachkanal gleichzeitig einen wiederkehrenden Zeitschlitz zur Übertragung nutzen, mit anderen Worten, sie können sich diesen Zeitschlitz teilen. Zum Beispiel können die über den Kontrollkanal zu übertragenden Informationen und die über den Sprachkanal zu übertragenden Informationen in Form eines nachrichtentechnischen Rahmens (englisch Frame) übertragen werden, wobei innerhalb des Rahmens ein erster Teil des Rahmens, zum Beispiel ein erster Unterrahmen, die Informationen, welche über den Kontrollkanal zu übertragen sind, übermitteln kann, und ein zweiter Teil des Rahmens, zum Beispiel ein zweiter Unterrahmen, die Informationen, welche über den Sprachkanal zu übertragen sind, übermitteln kann.

Ferner können in manchen Ausführungsbeispielen der Kontrollkanal und der Sprachkanal, einen gleichen Frequenzkanal, einen gleichen wiederkehrenden Zeitschlitz, jedoch einen unterschiedlichen Spreizcode zur Übertragung von Informationen nutzen.

Ein Kontrollkanal kann neben der Übertragung von Signalisierungs- und Steuerungsinformationen dazu ausgebildet sein, Nutzdaten, zum Beispiel in Form von Texten und/oder Zeichen, zu übertragen. Dazu kann zum Beispiel ein Teil der von einem Verkehrskanal genutzten Telekommunikationsressourcen dem Kontrollkanal zugewiesen werden, so dass dieser selbst Nutzdaten übertragen kann. Vorteilhaft hieran kann zum Beispiel sein, dass, wenn der Verkehrskanal zum Beispiel auf eine Übertragung von Sprache, zum Beispiel durch Anwendung eines Sprach-Codecs auf die von ihm zu übertragendenden Nutzdaten, optimiert ist, eine Übertragung andersartiger Nutzdaten, wie zum Beispiel von Texten oder Zeichen, zuverlässiger und effizienter über den Kontrollkanal erfolgen kann.

Handelt es sich bei dem Mobilfunksystem zum Beispiel um das Globale System für mobile Kommunikation, GSM, können zum Beispiel ein SDCCH-Kanal (aus dem Englischen für Stand-Alone Dedicated Control Channel, zu Deutsch Eigenständiger Dedizierter Kontroll-Kanal), ein SACCH-Kanal (aus dem Englischen für Slow Associated Control Channel, zu Deutsch Langsamer Zugeordneter Kontroll-Kanal), und/oder ein FACCH-Kanal (aus dem Englischen für Fast Associated Control Channel, zu Deutsch Schneller Zugeordneter Kontroll-Kanal) als Kontrollkanal zum Kommunizieren der ersten Informationen, zum Beispiel in Form einer SMS, genutzt werden.

Bei dem Sprachkanal zum Kommunizieren der zweiten Informationen kann es sich zum Beispiel um einen Verkehrskanal für Sprache, wie bei GSM zum Beispiel ein TCH/FS-Kanal (aus dem Englischen für Traffic Channel at full rate Speech, zu Deutsch Verkehrskanal für Sprache bei voller Datenrate) und/oder ein TCH/HS-Kanal (aus dem Englischen für Traffic Channel at half rate Speech, zu Deutsch Verkehrskanal für Sprache bei halber Datenrate) handeln.

Die ersten Informationen, welche über den Kontrollkanal übertragen werden, können in einigen Ausführungsbeispielen essentielle Informationen bezüglich des Notfalls umfassen, wie zum Beispiel den Notfallort, den Notfallzeitpunkt und eine Identifizierung des mobilen Endgeräts, von welchem der Notruf ausgeht, wie zum Beispiel dessen Rufnummer, und, sofern das mobile Endgerät von einem Kfz umfasst ist, eine VIN des Kfz.

Die zweiten Informationen, welche über den Sprachkanal übertragen werden, können in manchen Ausführungsbeispielen ein Gespräch zwischen einem Einsatzsachbearbeiter einer Notfallleitstelle und einer Person am Notfallort umfassen. Alternativ oder zusätzlich können die zweiten Informationen ein Anforderungssignal umfassen, welches von der Notfallleitstelle zu dem mobilen Endgerät übermittelt werden kann und welches dazu ausgebildet sein kann, das mobile Endgerät zu veranlassen, die ersten Informationen nochmals, zum Beispiel über den Sprachkanal, an die Notfallleitstelle zu übermitteln. Dies kann zum Beispiel vorteilhaft sein, wenn die ersten Informationen über den Kontrollkanal nicht oder nicht fehlerfrei übermittelt werden konnten. Das Übermitteln des Anforderungssignals über den Sprachkanal kann zum Beispiel eine In-Band-Kommunikation umfassen.

Bei einer In-Band-Kommunikation kann der Sprachkanal zu einer Übertragung von Daten und Kontrollsignalen, wie dem Anforderungssignal, genutzt werden, welche nicht in Form von Sprache vorliegen brauchen. Während dieser Übertragung von Daten und Kontrollsignalen über den Sprachkanal können zum Beispiel Lautsprecher und Mikrophone seitens des mobilen Endgeräts und seitens der Notfallleitstelle deaktiviert sein, so dass die Übertragung der Daten und der Kontrollsignale nicht über die Lautsprecher hörbar sein, das heißt, stumm sein, und nicht durch von den Mikrophonen unter Umständen aufgenommenen akustischen Signalen gestört werden kann. Ferner können bei der In-Band-Kommunikation über den Sprachkanal zu übertragende Daten und Kontrollsignale, wie zum Beispiel das Anforderungssignal, einer zusätzlichen digitalen Signalverarbeitung unterzogen werden, welche berücksichtigt, dass das zu übertragende Signal von einem Sprach-Codec des Sprachkanals verarbeitet wird. Diese zusätzliche digitale Signalverarbeitung kann zum Beispiel die über den Sprachkanal zu übertragenden Daten und Kontrollsignale so modulieren, dass sie in ihren Eigenschaften, wie zum Beispiel in ihrer Frequenzbandbreite, ihrer Autokorrelationsfunktion und ihrem Leistungsdichtespektrum, Sprachsignalen ähnlich erscheinen können.

Vorteilhaft daran, erste Informationen über den Kontrollkanal des Mobilfunksystems und zweite Informationen über den Sprachkanal des Mobilfunksystems zu übertragen, kann sein, dass der Kontrollkanal dazu ausgebildet sein kann, Daten, welche zum Beispiel in Form von Texten oder Zeichen vorliegen können, zu übertragen, während der Sprachkanal dazu ausgebildet sein kann, insbesondere ein Gespräch zwischen einem Einsatzsachbearbeiter und einer Person am Notfallort, zum Beispiel einem Fahrzeuginsassen bei einem Kfz-Notfall, zu übertragen. Auf diese Art und Weise können somit zuverlässiger sowohl der Austausch von Daten, welche Informationen bezüglich des Notfalls enthalten können, als auch die Durchführbarkeit eines Gespräches zwischen dem Einsatzsachbearbeiter und der Person am Notfallort gewährleistet werden.

Mögliche Ausführungsbeispiele schaffen darüber hinaus ein Verfahren, bei dem das Kommunizieren der ersten Informationen über den Kontrollkanal zeitlich vor dem Kommunizieren der zweiten Informationen über den Sprachkanal stattfinden kann. Ein Vorteil hieran kann sein, dass, indem wichtige Informationen bezüglich des Notfalls dem Einsatzsachbearbeiter bereits zum Zeitpunkt eines Gespräches mit der Person am Notfallort zum Beispiel in Form von Text, Zeichen oder grafischen Darstellungen vorliegen,, die Gesprächsführung sich vereinfachen und verkürzen kann und zielführender zweite Informationen während des Gespräches ausgetauscht werden können. Dabei können die ersten Informationen zum Beispiel in einer Landes- oder Amtssprache des Notfallortes an die Notfallleitstelle übertragen werden, so dass, auch wenn die Person am Notfallort nicht der Landes- beziehungsweise der Amtssprache mächtig ist und somit eine Verständigung in einem Gespräch mit dem Einsatzsachbearbeiter schwierig sein kann, dem Einsatzsachbearbeiter dennoch hilfreiche Informationen zur Koordination von Rettungsmaßnahmen vorliegen können.

Auch kann in manchen Ausführungsformen das Kommunizieren der ersten Informationen zwischen dem mobilen Endgerät und der Notfallleitstelle durchgeführt werden, bevor der Sprachkanal zwischen dem mobilen Endgerät und der Notfallleitstelle aufgebaut wird. Vorteilhaft hieran kann sein, dass das Kommunizieren der ersten Informationen unabhängig vom Aufbauen des Sprachkanals und damit schneller erfolgen kann. Es braucht zum Beispiel nicht auf das erfolgreiche Aufbauen des Sprachkanals gewartet zu werden, welches einige Sekunden, zum Beispiel ungefähr zwei bis fünf Sekunden, in Anspruch nehmen kann, sofern der Aufbau des Sprachkanals erfolgreich verläuft. Bei einem Fehlschlagen des Aufbaus des Sprachkanals kann es erforderlich sein, den Aufbauvorgang unter Umständen mehrmals zu wiederholen. Dies kann eine deutlich längere Zeit in Anspruch nehmen, zum Beispiel zehn Sekunden bis 60 Sekunden.

In einigen Implementierungsformen des vorliegenden Verfahrens können die ersten Informationen in einem sowohl zu dem mobilen Endgerät als auch zu der Notfallleitstelle entfernt gelegenen Datenverwaltungssystem gespeichert werden, bevor der Sprachkanal aufgebaut wird. Nachdem der Sprachkanal aufgebaut wurde, kann dann die Notfallleitstelle beziehungsweise ein Einsatzsachbearbeiter die ersten Informationen aus dem Datenverwaltungssystem abrufen. Daran kann vorteilhaft sein, dass die ersten Informationen an sämtlichen Notfallleitstellen, welche zur Versorgung und Bearbeitung des Notfalls infrage kommen, vorliegen können. Zum Beispiel kann beim Kommunizieren der ersten Informationen an die Euronotrufnummer 112 ein IVS eine genaue Notfallleitstelle unter Umständen nicht kennen. Das IVS sendet zum Beispiel die ersten Informationen an die Euronotrufnummer 112 und baut den Sprachkanal an die Euronotrufnummer 112 auf. Fraglich kann nun sein, ob die ersten Informationen auch an die Notfallleitstelle übermittelt werden, zu der auch der Sprachkanal aufgebaut wird. Um sicherzustellen, dass die ersten Informationen auch der Notfallleitstelle vorliegen, zu welcher der Sprachkanal aufgebaut wird, können die ersten Informationen in dem Datenverwaltungssystem gespeichert werden. Folglich kann die Notfallstelle, nachdem zu dieser der Sprachkanal aufgebaut wurde, die ersten Informationen aus dem Datenverwaltungssystem abrufen. Ferner sei hierbei angemerkt, dass die Notfallleitstelle die ersten Informationen lesen beziehungsweise auswerten kann, bevor die zweiten Informationen, zum Beispiel in Form eines Gespräches, über den Sprachkanal kommuniziert werden.

In einigen möglichen Implementierungen des vorliegenden Verfahrens können die ersten Informationen mittels eines Kurznachrichtendienstes (englisch Short Message Service, SMS) übertragen werden. Hieran kann vorteilhaft sein, dass der Kurznachrichtendienst SMS in vielen Mobilfunkstandards, wie GSM, UMTS und LTE, umgesetzt ist und somit nahezu flächendeckend zur Verfügung steht. Dies kann ein zuverlässigeres Kommunizieren der ersten Informationen bewirken. Im Folgenden bezeichne die Abkürzung SMS eine Kurznachricht des Kurznachrichtendienstes selbst, wie heutzutage im Sprachgebrauch üblich, sofern nicht ausdrücklich etwas anderes formuliert ist.

Ferner können in manchen Ausführungsbeispielen die ersten Informationen wenigstens eine der folgenden Informationen umfassen: Die geographischen Koordinaten des Notfallorts, die Anzahl der Notfallopfer, den Zeitpunkt des Notfalls, die SPIN eines Mobilfunkanbieters, über dessen Mobilfunknetz der Notruf getätigt wird, und einen Kennzeichner, ob ein den ersten Informationen zugeordneter Notruf automatisch oder manuell ausgelöst wurde. Außerdem können, insbesondere bei einem Notfall in oder bei einem Kfz, die ersten Informationen Informationen bezüglich einer Fahrrichtung des Kfz sowie eine VIN des Kfz umfassen.

Vorteilhaft hieran kann sein, dass der Notfallleitstelle somit wichtige Informationen zur Koordinierung von Rettungs- und Notfallmaßnahmen vorliegen können. Es kann somit der genaue Ort des Unfalls der Notfallleitstelle bekannt sein, wie auch die Fahrrichtung eines Kfz, aus dem der Notruf ausgelöst wurde. Dies kann vor allem bei einer Rettung auf einer Autobahn eine schnellere Bergung der vom Notfall betroffenen Personen und eine schnellere Absicherung des Notfallortes bewirken. Mit Kenntnis über die Anzahl der Notfallopfer können zum Beispiel ausreichend Rettungspersonal und Rettungsmaterial, insbesondere ausreichend viele Rettungswagen, an den Notfallort geschickt werden. Über die VIN kann die Notfallleitstelle erkennen, was für ein Kfz-Modell von dem Notfall betroffen ist, so dass insbesondere für dieses Kfz-Modell Notfallmaßnahmen ergriffen werden können. Den Rettungskräften können somit Informationen vorliegen, wie zum Beispiel ein bestimmtes Kfz-Modell bei einer Rettung am leichtesten und am sichersten geöffnet werden kann. Damit kann zum Beispiel die Rettungszeit verkürzt und die Rettung sicherer werden. An einem Kennzeichner, ob der Notruf automatisch oder manuell ausgelöst wurde, kann vorteilhaft sein, dass dieser zum Beispiel wichtige Rückschlüsse über die Art des Notfalls zulassen kann. Ein automatisch ausgelöster Notruf kann zum Beispiel für einen Unfall sprechen, da das automatische Auslösen zum Beispiel durch Sensoren, wie Aufprall-, Beschleunigungs- oder Airbag-Sensoren erfolgen kann. Ein manuell ausgelöster Notruf kann hingegen zum Beispiel für ein plötzliches Erkranken eines Fahrzeuginsassen sprechen.

Außerdem kann in einigen Ausführungsbeispielen das Kommunizieren der zweiten Informationen ein Kodieren und Dekodieren der zweiten Informationen nach einem Sprach-Codec umfassen. Vorteilhaft kann dies insbesondere zu einer besseren Verständlichkeit führen, sofern die zweiten Informationen in Form von Sprache vorliegen. Ferner kann ein Sprachkanal eines Mobilfunksystems über einen Sprach-Codec umgesetzt sein. Die zweiten Informationen können über diesen Sprachkanal zwischen dem mobilen Endgerät und der Notfallleitstelle ausgetauscht und mit dem Sprach-Codec kodiert und dekodiert werden. Dabei können die zweiten Informationen auch in Form von Daten oder Kontrollsignalen vorliegen und dennoch von dem Sprach-Codec verarbeitet, das heißt, über den Sprachkanal übertragen werden. Hieran kann vorteilhaft sein, dass solche Sprachkanäle in den meisten Mobilfunksystemen umgesetzt sind, so dass die zweiten Informationen unabhängig von dem genauen Mobilfunksystem, welches am Notfallort verfügbar sein kann, übertragen werden können. Zudem schreibt der eCall-Standard nach seinem derzeitigen Stand eine Nutzung eines Sprachkanals sowohl für die Übertragung von Sprache als auch für die Übertragung von Kontrollsignalen und von Daten, insbesondere des MSD, vor. Für ein dem eCall-Standard konformes Verfahren und damit für eine vielerorts mögliche Einsetzbarkeit von zumindest einigen Ausführungsbeispielen des vorliegenden Verfahrens kann es daher vorteilhaft sein, wenn das Kommunizieren der zweiten Informationen ein Kodieren und Dekodieren der zweiten Informationen nach einem Sprach-Codec umfasst.

In manchen möglichen Ausführungsformen können die ersten Informationen von dem mobilen Endgerät zu der Notfallleitstelle übermittelt werden. Außerdem kann seitens der Notfallleitstelle überprüft werden, ob die ersten Informationen fehlerfrei übermittelt wurden. Zusätzlich, im Falle einer fehlerfreien Übermittlung der ersten Informationen, können darüber hinaus die zweiten Informationen in Form von Sprache kommuniziert werden; während, im Falle einer fehlerbehafteten Übermittlung der ersten Informationen, die zweiten Informationen ein Anforderungssignal umfassen können. Dieses Anforderungssignal kann von der Notfallleitstelle zu dem mobilen Endgerät übermittelt werden. Es kann dazu ausgebildet sein, das mobile Endgerät dazu zu veranlassen, die ersten Informationen nochmals über den Sprachkanal zu übermitteln. Unter Fehlern bei der Übermittelung von Informationen werden hier und im Folgenden Datenfehler, wie zum Beispiel Bitfehler, verstanden, welche sich aus Verbindungsproblemen zwischen zwei Kommunikationspartnern, hier dem mobilen Endgerät und der Notfallleitstelle, ergeben, wie zum Beispiel durch Verzerrungen des Übertragungskanals oder durch Rauscheinflüsse. Solche Fehler können zum Beispiel durch Verwendung fehlererkennender Codes und der empfängerseitigen Auswertung von den übertragenen Codes zugeordneten Prüfwerten festgestellt werden. Ein mögliches Verfahren zur Fehlererkennung ist zum Beispiel die zyklische Redundanzprüfung (englisch Cyclic Redundancy Check, CRC). Ferner werde unter Fehlern bei der Übermittelung von Informationen hier und im Folgenden ein unbeabsichtigtes, mit anderen Worten, ein nicht einem der Übertragung zugrunde liegenden Protokoll entsprechendes Ausbleiben der Übermittlung der Informationen zwischen Sender und Empfänger, insbesondere ein unbeabsichtigtes gänzliches Ausbleiben eines Empfangs der Informationen, verstanden.

Vorteilhaft an den oben beschriebenen möglichen Ausführungsformen kann vor allem sein, dass die Zeit zur Ausführung des Notrufes, das heißt sowohl die Dauer für die Datenübermittelung als auch die Dauer bis zu einem Zustandekommen einer Gesprächsverbindung zwischen einem Einsatzsachbearbeiter einer Notfallleitstelle und einer Person am Notfallort, verkürzt werden kann. Liegen nämlich die ersten Informationen, bei eCall zum Beispiel ein MSD, welche über den Kontrollkanal des Mobilfunksystems übertragen werden können, fehlerfrei dem Einsatzsachbearbeiter vor, so kann ein Übertragen der ersten Informationen über den Sprachkanal, zum Beispiel über den Sprachkanal einer eCall-Verbindung, eingespart werden und ein Gespräch zwischen dem Einsatzsachbearbeiter und der Person am Notfallort umgehend erfolgen. Bei den zweiten Informationen kann es sich damit um Informationen aus diesem Gespräch handeln. Sollte die Übermittlung der ersten Informationen fehlerbehaftet und damit fehlgeschlagen sein, so kann, dem eCall-Standard konform, die Notfallleitstelle die ersten Informationen von dem mobilen Endgerät über den Sprachkanal anfordern. Die zweiten Informationen, welche zwischen der Notfallleitstelle und dem mobilen Endgerät ausgetauscht werden, können damit alternativ zu den zweiten Informationen aus dem oben beschrieben Gespräch ein Anforderungssignal umfassen und dem mobilen Endgerät signalisieren, die ersten Informationen nochmals über den Sprachkanal zu übermitteln.

In einigen Implementierungsbeispielen kann das für sowohl für das Kommunizieren der ersten Informationen als auch das für das Kommunizieren der zweiten Informationen zwischen dem mobilen Endgerät und der Notfallleitstelle genutzte Mobilfunksystem das Globale System für mobile Kommunikation, GSM, umfassen. Vorteilhaft hieran kann sein das insbesondere GSM ein weit verbreitetes und etabliertes Mobilfunksystem darstellt, welches zum Beispiel in Europa nahezu flächendeckend verfügbar ist, so dass folglich Notrufe basierend auf GSM vielerorts durchgeführt werden können.

Gemäß eines weiteren Aspektes der vorliegend Erfindung, schaffen Ausführungsbeispiele außerdem eine Vorrichtung zum Übermitteln von Informationen bezüglich eines Notfalls zwischen einem mobilen Endgerät und einer Notfallleitstelle. Die Vorrichtung umfasst eine Einrichtung, zum Beispiel eine Mobilfunkschnittstelle, zum Kommunizieren, über einen Kontrollkanal eines Mobilfunksystems, von ersten Informationen bezüglich des Notfalls zwischen dem mobilen Endgerät und der Notfallleitstelle. Ferner umfasst die Vorrichtung eine Einrichtung zum Kommunizieren, über einen Sprachkanal des Mobilfunksystems, von zweiten Informationen bezüglich des Notfalls zwischen dem mobilen Endgerät und der Notfallleitstelle. Bei der Einrichtung zum Kommunizieren der zweiten Informationen kann es sich um dieselbe Einrichtung wie zum Kommunizieren der ersten Informationen handeln, das heißt zum Beispiel die oben genannte Mobilfunkschnittstelle. Diese kann zum Beispiel sowohl dazu ausgebildet sein, die ersten Informationen über einen Kontrollkanal und die zweiten Informationen über einen Sprachkanal des Mobilfunksystems zu übertragen.

Die beschriebene Vorrichtung kann von einem Kraftfahrzeug umfasst sein. Alternativ oder zusätzlich kann eine solche Vorrichtung von einer Notfallleitstelle umfasst sein.

Ferner kann die beschriebene Vorrichtung ein System umfassen, welches nach den oben beschriebenen Ausführungsbeispielen ein Verfahren zum Übertragen von Informationen bezüglich eines Notfalls zwischen einem mobilen Endgerät und einer Notfallleitstelle implementieren kann.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Figur 1: ein Flussdiagramm eines Ausführungsbeispiels eines Verfahrens zum Übertragen von Informationen bezüglich eines Notfalls zwischen einem mobilen Endgerät und einer Notfallleitstelle; und
- Figur 2: ein Flussdiagramm eines Ausführungsbeispiels eines weiteren Verfahrens zum Übertragen von Informationen bezüglich eines Notfalls zwischen einem In-Vehikel-System und einem Telematikdienst-Anbieter.

Verschiedene Ausführungsbeispiele werden nun ausführlicher unter Bezugnahme auf die beiliegenden Zeichnungen beschrieben, in denen einige Ausführungsbeispiele dargestellt sind.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

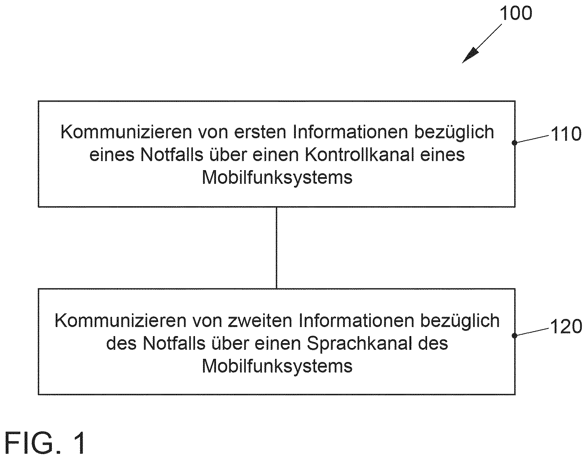

Einführend zeigt Figur 1 ein Ausführungsbeispiel eines Verfahrens 100 zum Übertragen von Informationen bezüglich eines Notfalls zwischen einem mobilen Endgerät und einer Notfallleitstelle. Das Verfahren 100 umfasst ein Kommunizieren 110 von ersten Informationen bezüglich des Notfalls über einen Kontrollkanal eines Mobilfunksystems zwischen dem mobilen Endgerät und der Notfallleitstelle. Außerdem umfasst das Verfahren 100 ein Kommunizieren 120 von zweiten Informationen bezüglich des Notfalls über einen Sprachkanal des Mobilfunksystems zwischen dem mobilen Endgerät und der Notfallleitstelle. Bei dem Kontrollkanal kann es sich zum Beispiel um einen logischen Kanal, welcher auch einer Übertragung von Signalisierungs- und Steuerungsinformationen dienen kann, handeln. Beispiele sind GSM SDCHH-, SACCH- oder FACCH-Kanäle. Auch kann es sich bei dem Sprachkanal um einen logischen Kanal, wie zum Beispiel einen GSM TCH/FS- oder TCH/HS-Kanal, handeln.

Über den Kontrollkanal kann zum Beispiel eine SMS, welche die ersten Informationen bezüglich des Notfalls umfassen kann, wie zum Beispiel den Notfallort und den Notfallzeitpunkt, von dem mobilen Endgerät zu der Notfallleitstelle übertragen werden. Nun kann einerseits die Möglichkeit bestehen, dass diese ersten Informationen fehlerfrei von der Notfallleitstelle empfangen werden können, so dass zwischen der Notfallleitstelle und dem mobilen Endgerät die zweiten Informationen bezüglich des Notfalls zum Beispiel in Form eines Gespräches zwischen einer Person am Notfallort, welche das mobile Endgerät nutzt, und einem Einsatzsachbearbeiter der Notfallleitstelle ausgetauscht werden können.

Andererseits kann es vorkommen, dass die ersten Informationen fehlerbehaftet von der Notfallleitstelle empfangen werden und daher der Notfallleitstelle noch nicht vorliegen können. Dann können die zweiten Informationen zum Beispiel ein Anforderungssignal umfassen, welches von der Notfallleitstelle an das mobile Endgerät über den Sprachkanal gesendet werden kann, um das mobile Endgerät dazu zu veranlassen, die ersten Informationen nochmals an die Notfallleitstelle zu übermitteln. Für die nochmalige Übermittlung der ersten Informationen kann das mobile Endgerät zum Beispiel den Sprachkanal des Mobilfunksystems nutzen. Zusätzlich oder alternativ kann das mobile Endgerät auch den Kontrollkanal nutzen, um die ersten Informationen nochmals an die Notfallleitstelle zu übermitteln.

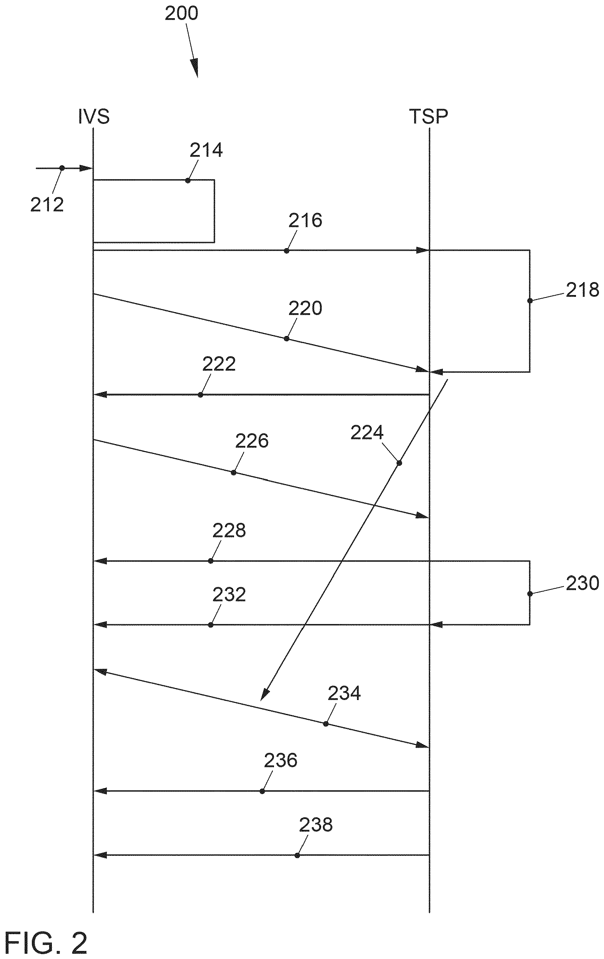

Figur 2 zeigt ein Flussdiagramm eines möglichen Verfahrens 200 zum Übertragen von Informationen bezüglich eines Notfalls zwischen einem IVS und einem Telematikdienst-Anbieter (TSP). Die vertikale Richtung im Flussdiagramm der Figur 2 sei als eine Zeitachse zu verstehen, auf der zeitlich eher stattfindende Ereignisse und Vorgänge umso weiter oben angeordnet sind, je früher sie sich ereignen.

Dabei kann das IVS von einer Auto-Konnektivität-Einheit (englisch Car Connectivity Unit, CCU) umfasst sein, welche dazu ausgebildet sein kann, eine Verbindung zum Beispiel über ein Mobilfunknetz zu dem TSP aufzubauen, und eine Netzzugangsberechtigung, beispielsweise eine SIM-Karte (englisch für Subscriber Identity Module, zu Deutsch Teilnehmer-Identitätsmodul), umfassen kann. Die CCU kann wiederum von einer elektronischen Kontrolleinheit (englisch Electronic Control Unit, ECU) eines Kfz umfasst sein und gesteuert werden. Bei einer ECU kann es sich zum Beispiel um ein eingebettetes System des Kfz handeln, welches zur zentralen, elektronischen Steuerung verschiedener Subsysteme des Kfz, wie beispielsweise des Motors und der Bremsen des Kfz, dienen kann.

Ein mögliches Ausführungsbeispiel des vorliegenden Verfahrens 200 beginnt in einem Notfall des Kfz mit einem Auslösen eines Notrufes durch ein Notfall-Trigger-Signal. Dieses kann automatisch, zum Beispiel durch das Ansprechen von Aufprall-, Beschleunigungs-, und/oder Airbag-Sensoren, generiert werden 212. Ein solches Signal wird auch als ACN-Trigger (englisch für Automatic Crash Notification, zu Deutsch Automatische Unfallmeldung) bezeichnet. Alternativ oder zusätzlich kann das Notfall-Trigger-Signal 212 manuell erzeugt werden, zum Beispiel über eine Betätigung einer Notfalltaste, und wird dann auch als MEC-Trigger (englisch Manual Emergency Call, zu Deutsch Manuell Ausgelöster Notruf) bezeichnet. In Reaktion auf das Notfall-Trigger-Signal 212 kann das IVS unverzüglich eine SMS, zum Beispiel über ein Mobilfunksystem, an den TSP senden 214.

Die SMS kann dabei über einen Kontrollkanal des Mobilfunksystems, zum Beispiel über einen GSM SDCCH-, SACCH- oder FACCH-Kanal, versendet werden. Zum Übermitteln der SMS an den TSP kann die SMS zunächst von dem IVS an ein Kurznachrichten-Servicezentrum (englisch Short Message Service Center, SMSC) übertragen werden. Das SMSC kann mit einem PSAP verbunden sein, zum Beispiel durch ein Übertragungsverfahren basierend auf dem Internetprotokoll (IP), wie zum Beispiel dem Kurznachrichten-Peer-zu-Peer-Protokoll (englisch Short Message Peer to Peer Protocol, SMPP-Protocol), und die SMS an den PSAP weiterleiten. Am PSAP können die SMS beziehungsweise die in ihr enthaltenen Daten gefiltert werden und an den TSP, beispielsweise nach einem SMPP-Protokoll, übermittelt werden. Bei der Übertragung der SMS vom SMSC zum PSAP und bei der Übertragung der SMS vom PSAP an den TSP können zum Beispiel SMPP-Verbindungs-Befehle (englisch SMPP bind commands) aus dem SMPP-Protokoll zur Herstellung von Verbindungen genutzt werden.

Außerdem kann die SMS einen MSD bezüglich des Notfalls umfassen. Optional kann die SMS zusätzlich einen erweiterten Datensatz (englisch Extended Set of Data, ESD) umfassen, welcher zum Beispiel Informationen zu der Schwere des Notfalls enthalten kann, zum Beispiel, ob sich das Kfz überschlagen hat, bei welcher Geschwindigkeit der Notruf ausgelöst wurde, ob sich eine Brandentwicklung im oder am Fahrzeug ereignet, ob die Sicherheitsgurte angelegt waren, et cetera.

Der TSP kann die SMS empfangen, den MSD und gegebenenfalls den ESD aus dieser dekodieren beziehungsweise extrahieren und den MSD und gegebenenfalls den ESD mit einer Ticket-Identitätsnummer versehen. Die Ticket-Identitätsnummer kann zum Beispiel aus einem Zeitstempel der empfangenen SMS und optional zusätzlich aus der in dem MSD übermittelten VIN des Kfz generiert werden, so dass der übermittelte MSD und gegebenenfalls der zusätzlich übermittelte ESD eindeutig dem Kfz und einem bestimmten Notfall dieses Kfz zugeordnet werden können.

Nach Versenden der SMS 214, kann das IVS umgehend damit beginnen, eine Notrufverbindung, zum Beispiel über das zum Versenden der SMS genutzte Mobilfunksystem, zu dem TSP aufzubauen 216. Nach Eingang der Notrufverbindung, bei welcher zum Beispiel unter anderem die VIN des notrufenden Kfz vom IVS an den TSP übermittelt werden kann, kann der TSP überprüfen 218, beispielsweise anhand der VIN, ob er von diesem Kfz innerhalb einer vorausgegangenen, vorher festgelegten Zeitspanne, zum Beispiel fünf Minuten, fünfzehn Minuten oder fünfundzwanzig Minuten, eine gültige und fehlerfreie SMS mit einem MSD und gegebenenfalls mit einem ESD empfangen hat.

Während des Überprüfens 218 des Empfangs einer gültigen und fehlerfreien SMS durch den TSP, kann das IVS beispielsweise ein mit dem eCall-Standard konformes Initiierungssignal an den TSP senden. Ein solches Initiierungssignal kann zum Beispiel über eine Zeitdauer von zwei Sekunden, drei Sekunden oder fünf Sekunden gesendet werden und einer Synchronisierung einer Datenverbindung zwischen dem IVS und dem TSP über einen Sprachkanal des Mobilfunksystems dienen. Bei dem Sprachkanal kann es sich zum Beispiel um einen logischen Kanal, wie einen GSM TCH/FS- oder TCH/HS-Kanal handeln. Ferner können das IVS und der TSP zum Beispiel über sogenannte In-Band-Modems verfügen. Dies sind Vorrichtungen, welche dazu ausgebildet sein können, Daten und Kontrollsignale so aufzubereiten, dass sie über einen Sprachkanal eines Mobilfunksystems übertragen werden können. Mit anderen Worten, In-Band-Modems können sowohl auf Seite des IVS als auch auf Seite des TSP Daten und Kontrollsignale für das Versenden und das Empfangen über den Sprachkanal modulieren beziehungsweise demodulieren.

Nach Übermitteln des Initiierungssignals 220 an den TSP und nach Abschluss der Synchronisierung der Datenverbindung zwischen dem IVS und dem TSP, können, basierend auf der Überprüfung 218 des Empfangs einer gültigen und fehlerfreien SMS durch den TSP, zwei verschiedene Bedingungen am TSP vorliegen:
Die SMS konnte fehlerfrei am TSP empfangen werden. Das von ihr umfasste MSD und gegebenenfalls das von ihr umfasste ESD sind vom TSP lesbar, so dass die in diesen enthaltenen Informationen dem TSP vorliegen können. Ein Übertragen dieser Informationen über den Sprachkanal des Mobilfunksystems kann daher eingespart werden. Mit anderen Worten, der TSP braucht die Informationen aus dem MSD und gegebenenfalls aus dem ESD nicht über ein Anforderungssignal 222 von dem IVS nochmals abrufen. Stattdessen kann er für eine gemäß dem eCall-Standard vorher festgelegt Zeitspanne, zum Beispiel zwei Sekunden, drei Sekunden oder fünf Sekunden, untätig bleiben, und danach in einen Gesprächsmodus, das heißt, in einen Übertragungsmodus für Sprache über den Sprachkanal des Mobilfunksystems, umschalten 224. Durch Unterlassen des Versendens des Anforderungssignals 222 an das IVS, kann außerdem eine Zeitüberschreitungsbedingung (englisch Time-Out) zum Empfang des Anforderungssignals am IVS eintreten, zum Beispiel nach Ablauf der Zeitspanne, während der der TSP untätig ist. Da somit ein Empfang des Anforderungssignals am IVS ausbleibt, kann auch das IVS umgehend nach Eintreten der Zeitüberschreitungsbedingung auf den Gesprächsmodus umschalten. Nun kann ein Gespräch 234 zwischen dem IVS und dem TSP stattfinden. In diesem Gespräch 234 können zum Beispiel weitere, zweite Informationen bezüglich des Notfalls, beispielsweise zwischen einer Person am IVS beziehungsweise am Notfallort und einem Einsatzsachbearbeiter des TSP oder einer öffentlichen Notfallleitstelle, ausgetauscht werden.

Auf der anderen Seite ist es möglich, dass die SMS nicht fehlerfrei am TSP empfangen werden kann, so dass das von ihr umfasste MSD und gegebenenfalls das ESD nicht vom TSP lesbar sein können. Die Informationen bezüglich des Notfalls aus dem MSD und gegebenenfalls aus dem ESD können daher noch nicht am TSP vorliegen. Folglich kann der TSP ein Anforderungssignal über den Sprachkanal des Mobilfunksystems an das IVS übermitteln 222. Mit diesem kann der TSP das IVS dazu aufzufordern, nochmals das MSD und gegebenenfalls das ESD über den Sprachkanal zu übermitteln. Kann das IVS das Anforderungssignal fehlerfrei empfangen, bevor die Zeitüberschreitungsbedingung zu dessen Empfang eintritt, so kann das IVS das MSD und gegebenenfalls das ESD über den Sprachkanal an den TSP erneut übermitteln 226.

Kann kein Initiierungssignal oder dieses nur fehlerbehaftet vom TSP empfangen werden, so kann am TSP eine Zeitüberschreitungsbedingung zum Empfang des Initiierungssignals eintreten. Nach Eintritt dieser, wenn zum Beispiel nach zwei Sekunden, drei Sekunden oder fünf Sekunden seit Aufbau der Notrufverbindung 216 kein fehlerfreies Initiierungssignal am TSP empfangen werden kann, kann der TSP auf den Gesprächsmodus 234 umschalten und das Übermitteln des Anforderungssignals an das IVS unterlassen, so dass auch das IVS nach Eintreten der Zeitüberschreitungsbedingung zum Empfang des Anforderungssignals auf den Gesprächsmodus 234 umschalten kann.

Nach einem fehlerfreien Empfang des Anforderungssignals kann das IVS das MSD und gegebenenfalls das ESD solange und wiederholt an den TSP senden, bis der TSP dem IVS deren fehlerfreien Empfang quittiert oder bis eine Zeitüberschreitungsbedingung zum Empfang dieser Quittierung am IVS eintritt. Zum Quittieren kann der TSP an das IVS beispielsweise ein Bestätigungssignal (englisch Acknowledge-Signal) über den Sprachkanal übermitteln 228. Bei dem Bestätigungssignal kann es sich zum Beispiel um ein Bestätigungssignal einer niedrigen Übertragungsschicht (englisch Low-Level), beispielsweise einer Netzzugangsschicht (englisch Link-Layer), handeln. Ein solches Bestätigungssignal wird daher auch als Link-Layer-Acknowledge-Signal bezeichnet. Unter einer Übertragungsschicht werde hier eine Schicht aus einem Referenzmodell für Netzwerkprotokolle, wie zum Beispiel des Offene-Systeme-Verbindungsmodells (englisch Open Systems Interconnection Model, OSI-Model) oder des Übertragungssteuerungsprotokoll-Internetprotokoll-Modells (englisch Transmission-Control-Protocol-Internet-Protocol-Model, TCP/IP-Model), verstanden. Die Zeitüberschreitungsbedingung zum Empfang der Quittierung, zum Beispiel des Link-Layer-Acknowledge-Signals, seitens des IVS kann zum Beispiel zwanzig Sekunden, fünfundzwanzig Sekunden oder dreißig Sekunden betragen. Während dieser Zeit kann das IVS kontinuierlich und wiederholt das MSD und gegebenenfalls das ESD an den TSP über den Sprachkanal des Mobilfunksystems senden.

Tritt die Zeitüberschreitungsbedingung zum Empfang der Quittierung beziehungsweise des Link-Layer-Acknowledge-Signals auf der Seite des IVS ein, so kann das IVS dies so interpretieren, dass das MSD und gegebenenfalls das ESD nicht fehlerfrei an den TSP übermittelt werden können. Das IVS kann dann auf den Gesprächsmodus umschalten. Können seitens des TSP das MSD und gegebenenfalls das ESD nicht bis zum Eintreten einer Zeitüberschreitungsbedingung zum Empfang des MSD und gegebenenfalls des ESD über den Sprachkanal des Mobilfunksystems, zum Beispiel bis nach Ablauf von zwanzig Sekunden, fünfundzwanzig Sekunden oder dreißig Sekunden ab dem Übermitteln des Anforderungssignals 222, fehlerfrei empfangen werden, so kann auch der TSP auf den Gesprächsmodus umschalten.

Hat der TSP das MSD und gegebenenfalls das ESD über den Sprachkanal fehlerfrei empfangen, so kann der TSP den Inhalt des MSD und gegebenenfalls des ESD überprüfen 230, um festzustellen, ob die von ihm benötigten Informationen bezüglich des Notfalls in diesen enthalten sind. Nach Überprüfen des Inhalts des MSD und gegebenenfalls des ESD kann der TSP ein Bestätigungssignal, zum Beispiel ein Bestätigungssignal einer höheren Übertragungsschicht, beispielsweise einer Anwendungsschicht (englisch Application-Layer), über den Sprachkanal an das IVS übermitteln. Ein solches Bestätigungssignal wird auch als Application-Layer-Acknowledge-Signal bezeichnet. Es kann einen Kennzeichner, zum Beispiel ein Bit, umfassen, welches dem IVS signalisieren kann, ob die über das MSD und gegebenenfalls über das ESD an den TSP übermittelten Informationen bezüglich des Notfalls den von dem TSP benötigten Informationen entsprechen oder nicht. Nach Absenden des Application-Layer-Acknowledge-Signals seitens des TSP kann der TSP auf den Gesprächsmodus 234 umschalten.

Das IVS kann auf den Gesprächsmodus 234 umschalten, sobald es zum Beispiel das Application-Layer-Acknowledge-Signal empfangen hat. Kann das IVS kein fehlerfreies Application-Layer-Acknowledge-Signal vom TSP empfangen, so kann das IVS auch auf den Gesprächsmodus 234 umschalten, sofern eine Zeitüberschreitungsbedingung zum Empfang des Application-Layer-Acknowledge-Signals eintritt. Diese Zeitüberschreitungsbedingung kann zum Beispiel so gestellt sein, dass zwischen dem Empfang des Link-Layer-Acknowledge-Signals und des Application-Layer-Acknowledge-Signals seitens des IVS maximal beispielsweise fünf Sekunden, acht Sekunden oder zehn Sekunden vergehen dürfen.

Nach einem erfolgten Gespräch 234 zwischen dem IVS und dem TSP, kann der TSP ein weiteres, aktualisiertes MSD und gegebenenfalls ein weiteres, aktualisiertes ESD von dem IVS über ein nach Ausführen des Gesprächsmodus 234 übermitteltes Anforderungssignal 236, welches beispielsweise über den Sprachkanal des Mobilfunksystems übertragen werden kann, abrufen. Zum Beispiel kann sich das Kfz zwischenzeitlich bewegt und damit einen neuen geografischen Ort eingenommen haben. Dann kann es zum Beispiel vorteilhaft sein, den neuen geografischen Ort des Kfz nochmals mittels eines MSD und gegebenenfalls zusätzlich ein ESD von dem IVS an den TSP zu übermitteln (nicht gezeigt in Figur 2), so dass der TSP Kenntnis über diesen neuen Ort erlangen kann. Der TSP kann einen fehlerfreien Empfang dieses weiteren, aktualisierten MSD und gegebenenfalls des weiteren, aktualisierten ESD dem IVS durch ein weiteres, nach Ausführen des Gesprächsmodus 234 übermitteltes Application-Layer-Acknowledge-Signal 238 bestätigen. Dieses weitere, nach Ausführen des Gesprächsmodus 234 übermittelte Application-Layer-Acknowledge-Signal 238 kann zum Beispiel über den Sprachkanal des Mobilfunksystems übertragen werden.

Zusammenfassend sei nochmals hervorgehoben, dass das IVS das MSD und gegebenenfalls das ESD bezüglich des Notfalls zunächst per SMS an den TSP über einen Kontrollkanal des Mobilfunksystems senden kann 214, noch bevor die Notrufverbindung zwischen dem IVS und dem TSP aufgebaut wird 216. Bei der SMS kann es sich zum Beispiel um eine konventionelle SMS, das heißt, um eine SMS, welche nach den gängigen Verfahren und Protokollen, wie dem SMPP-Protokoll über einen SMSC von dem IVS zu dem TSP übertragen werden kann, handeln. Liegt bis zum Abschluss der Synchronisierung der Datenverbindung zwischen dem IVS und dem TSP über einen Sprachkanal des Mobilfunksystems durch das Übermitteln des Initiierungssignals 220, ein gültiges und fehlerfreies MSD und gegebenenfalls zusätzlich ein gültiges und fehlerfreies ESD am TSP vor, so kann der TSP auf den Gesprächsmodus 234 umschalten. Das IVS kann ebenfalls auf den Gesprächsmodus nach Eintreten der Zeitüberschreitungsbedingung zum Empfang des Anforderungssignals umschalten. Die Zeitüberschreitungsbedingung kann eintreten, da das Anforderungssignal aufgrund des MSD und gegebenenfalls des ESD, welche bereits am TSP vorliegen, nicht vom TSP an das IVS gesendet werden braucht und damit ausbleibt. Folglich kann das unter Umständen zeitaufwendige Anfordern, Übertragen und Bestätigen des Empfangs des MSD und gegebenenfalls des ESD über den Sprachkanal des Mobilfunksystems eingespart werden. Somit können zum Beispiel früher ein Gespräch zwischen einer Person am Unfallort und einem Einsatzsachbearbeiter des TSP stattfinden, der Notruf schneller abgeschlossen und damit eher Rettungsmaßnahmen am Notfallort umgesetzt werden.

Kann das MSD und gegebenenfalls das ESD nicht fehlerfrei vorab per SMS an den TSP übertragen werden, so können diese nach dem vorliegenden Ausführungsbeispiel und dem eCall-Standard konform über den Sprachkanal des Mobilfunksystems, zum Beispiel unter Verwendung von In-Band-Modems seitens des IVS und seitens des TSP beziehungsweise durch eine In-Band-Kommunikation, übertragen werden.

Das vor dem Aufbauen der Notrufverbindung stattfindende Übertragen der SMS von dem IVS an den TSP beziehungsweise zu einer Notfallleitstelle kann somit als ein Hinzufügen von Redundanz zur Übermittelung des MSD und gegebenenfalls des ESD verstanden werden. Das MSD und gegebenenfalls das ESD können per SMS an den TSP beziehungsweise an die Notfallleitstelle übermittelt werden. Kann der TSP beziehungsweise die Notfallleitstelle diese nicht fehlerfrei empfangen oder ist der TSP beziehungsweise die Notfallleitstelle nicht für einen Empfang der SMS ausgebildet, so können in zumindest einigen Ausführungsbeispielen des vorliegenden Verfahrens das MSD und gegebenenfalls das ESD dem eCall-Standard konform zusätzlich auch per In-Band-Kommunikation an den TSP beziehungsweise an die Notfallleitstelle übermittelt werden.

Es sei nochmals hervorgehoben, dass unter In-Band-Kommunikation ein Austausch von Daten und Kontrollsignalen, wie zum Beispiel des Anforderungssignals, des MSD, des ESD, des Link-Layer-Acknowledge-Signals und des Application-Layer-Acknowledge-Signals, über den Sprachkanal des Mobilfunksystems verstanden werde. Bei der In-Band-Kommunikation kann also der Sprachkanal zu einer Übertragung von Daten und Signalen genutzt werden, welche nicht in Form von Sprachsignalen vorliegen brauchen. Während dieser Übertragung von Daten und Kontrollsignalen über den Sprachkanal können zum Beispiel Lautsprecher und Mikrophone seitens des IVS und seitens des TSP deaktiviert sein, so dass die Übertragung der Daten und der Kontrollsignale nicht über die Lautsprecher hörbar sein, das heißt, stumm sein, und nicht durch von den Mikrophonen unter Umständen aufgenommenen akustischen Signalen gestört werden kann. Nach Übermittelung des MSD und gegebenenfalls des ESD kann dann der Sprachkanal für eine Gesprächsverbindung zwischen dem IVS und dem TSP genutzt werden. Dabei können zum Beispiel die Lautsprecher und Mikrophone seitens des IVS und seitens des TSP aktiviert werden. Zum Beispiel kann der TSP seine Lautsprecher und Mikrophone nach Absenden eines Application-Layer-Acknowledge-Signals und das IVS seine Lautsprecher und Mikrophone nach dessen Empfang aktivieren.

In manchen Ausführungsbeispielen kann zusätzlich ein Empfang der SMS am TSP eintreten, nachdem der Sprachkanal zwischen dem IVS und dem TSP aufgebaut wurde. Der Empfang der SMS kann zum Beispiel nach dem Übermitteln 222 des Anforderungssignals vom TSP an das IVS erfolgen. Bei einem fehlerfreien Empfang der SMS können das MSD und gegebenenfalls das ESD aus der SMS am TSP extrahiert werden. Anschließend kann der TSP ein Link-Layer-Acknowledge-Signal und optional ein Application-Layer-Acknowledge-Signal an das IVS übermitteln, so dass das IVS das MSD und gegebenenfalls das ESD nicht mehr über den Sprachkanal zu übermitteln braucht beziehungsweise ein gegebenenfalls bereits ausgeführtes Übermitteln einstellen kann. Das IVS und der TSP können dann früher auf den Gesprächsmodus 234 umschalten.

### Bezugszeichenliste

- 100: Verfahren zum Übertragen von Informationen bezüglich eines Notfalls zwischen einem mobilen Endgerät und einer Notfallleitstelle
- 110: Kommunizieren von ersten Informationen bezüglich eines Notfalls über einen Kontrollkanal eines Mobilfunksystems
- 120: Kommunizieren von zweiten Informationen bezüglich des Notfalls über einen Sprachkanal des Mobilfunksystems
- 200: Verfahren zum Übertragen von Informationen bezüglich eines Notfalls zwischen einem IVS und einem TSP
- 212: Generierung beziehungsweise Empfang eines Notfall-Trigger-Signals durch das IVS
- 214: Senden einer SMS mit einem MSD und gegebenenfalls mit einem ESD von einem IVS zu einem TSP
- 216: Aufbau einer Notrufverbindung von einem IVS zu einem TSP
- 218: Überprüfen eines Empfangs einer gültigen und fehlerfreien SMS
- 220: Übermitteln eines Initiierungssignals von einem IVS zu einem TSP
- 222: Übermitteln eines Anforderungssignals von einem TSP zu einem IVS zum Anfordern eines MSD und gegebenenfalls eines ESD
- 224: Umschalten in einen Gesprächsmodus seitens eines TSP
- 226: Übermitteln eines MSD und gegebenenfalls eines ESD über einen Sprachkanal von einem IVS zu einem TSP
- 228: Übermitteln einer Quittierung beziehungsweise eines Link-Layer-Acknowledge-Signals von einem TSP zu einem IVS
- 230: Überprüfen des Inhalts eines MSD und gegebenenfalls eines ESD seitens eines TSP
- 232: Übermitteln eines Application-Layer-Acknowledge-Signals von einem TSP zu einem IVS
- 234: Gespräch beziehungsweise Gesprächsmodus zwischen einem IVS und einem TSP
- 236: Übermitteln eines weiteren Anforderungssignals von einem TSP zu einem IVS nach Ausführen eines Gesprächsmodus
- 238: Übermitteln eines weiteren Application-Layer-Acknowledge-Signals von einem TSP zu einem IVS nach Ausführen eines Gesprächsmodus

## Patentansprüche

1. Verfahren (100, 200) zum Übertragen von Informationen bezüglich eines Notfalls zwischen einem mobilen Endgerät und einer Notfallleitstelle, umfassend:
Kommunizieren (110), über einen Kontrollkanal eines Mobilfunksystems, von ersten Informationen bezüglich des Notfalls zwischen dem mobilen Endgerät und der Notfallleitstelle; und
Kommunizieren (120), über einen Sprachkanal des Mobilfunksystems, von zweiten Informationen bezüglich des Notfalls zwischen dem mobilen Endgerät und der Notfallleitstelle,
wobei die ersten Informationen, über den Kontrollkanal, zwischen dem mobilen Endgerät und der Notfallleitstelle kommuniziert werden, bevor der Sprachkanal aufgebaut wird, wobei die ersten Informationen in einem sowohl zu dem mobilen Endgerät als auch zu der Notfallleitstelle entfernt gelegenen Datenverwaltungssystem gespeichert werden, bevor der Sprachkanal aufgebaut wird, und wobei die Notfallleitstelle die ersten Informationen aus dem Datenverwaltungssystem abruft, nachdem der Sprachkanal aufgebaut wurde,
wobei die ersten Informationen von dem mobilen Endgerät zu der Notfallleitstelle übermittelt werden, ferner umfassend:
Überprüfen (218), seitens der Notfallleitstelle, ob die ersten Informationen fehlerfrei übermittelt wurden, und wobei
im Falle einer fehlerfreien Übermittlung der ersten Informationen, die zweiten Informationen in Form von Sprache kommuniziert werden; und
wobei im Falle einer fehlerbehafteten Übermittlung der ersten Informationen, die zweiten Informationen ein Anforderungssignal umfassen, welches von der Notfallleitstelle zu dem mobilen Endgerät übermittelt wird und dazu ausgebildet ist, das mobile Endgerät zu veranlassen, die ersten Informationen nochmals über den Sprachkanal zu übermitteln.

2. Verfahren (100, 200) nach Anspruch 1, wobei das Kommunizieren (110) der ersten Informationen über den Kontrollkanal zeitlich vor dem Kommunizieren (120) der zweiten Informationen über den Sprachkanal stattfindet.

3. Verfahren (100, 200) nach einem der vorangehenden Ansprüche, wobei die ersten Informationen mittels eines Kurznachrichtendienstes, SMS, übertragen werden.

4. Verfahren (100, 200) nach einem der vorangehenden Ansprüche, wobei die ersten Informationen wenigstens eine der folgenden Informationen umfassen: Geographische Koordinaten des Notfallortes, Anzahl der Notfallopfer, Zeitpunkt des Notfalls, Service-Anbieter-Identifizierungsnummer und Kennzeichner, ob ein den ersten Informationen zugeordneter Notruf automatisch oder manuell ausgelöst wurde.

5. Verfahren (100, 200) nach einem der vorangehenden Ansprüche, wobei das Kommunizieren (120) der zweiten Informationen ein Kodieren und Dekodieren der zweiten Informationen nach einem Sprach-Codec umfasst.

6. Verfahren (100, 200) nach einem der vorangehenden Ansprüche, wobei das Mobilfunksystem das Globale System für mobile Kommunikation, GSM, umfasst.

## Claims

1. Method (100, 200) for transmitting information regarding an emergency between a mobile terminal and an emergency control center, comprising:
communicating (110), via a control channel of a mobile radio system, first information regarding the emergency between the mobile terminal and the emergency control center; and
communicating (120), via a voice channel of the mobile radio system, second information regarding the emergency between the mobile terminal and the emergency control center,
wherein the first information is communicated via the control channel between the mobile terminal and the emergency control center before the voice channel is established, wherein, before the voice channel is established, the first information is stored in a data management system that is remote to both the mobile terminal and the emergency control center, and wherein the emergency control center retrieves the first information from the data management system after the voice channel has been established,
wherein the first information is transmitted from the mobile terminal to the emergency control center, further comprising:
checking (218), on the part of the emergency control center, whether the first information was transmitted without errors, and wherein
in the event of an error-free transmission of the first information, the second information is communicated in the form of speech; and
wherein, in the event of an erroneous transmission of the first information, the second information comprises a request signal that is transmitted from the emergency control center to the mobile terminal and is designed to cause the mobile terminal to transmit the first information once again via the voice channel.

2. Method (100, 200) according to Claim 1, wherein communicating (110) the first information over the control channel takes place temporally before communicating (120) the second information over the voice channel.

3. Method (100, 200) according to one of the preceding claims, wherein the first information is transmitted by means of a short message service (SMS).

4. Method (100, 200) according to one of the preceding claims, wherein the first information comprises at least one of the following items of information: geographical coordinates of the emergency location, number of emergency victims, time of the emergency, service provider identification number, and identifier of whether an emergency call associated with the first information was initiated automatically or manually.

5. Method (100, 200) according to one of the preceding claims, wherein communicating (120) the second information comprises encoding and decoding the second information according to a speech codec.

6. Method (100, 200) according to one of the preceding claims, wherein the mobile radio system comprises the Global System for Mobile Communications (GSM).

## Revendications

1. Procédé (100, 200) pour la transmission d'informations concernant une urgence entre un terminal mobile et un poste de conduite de secours, comprenant :
la communication (110), à travers un canal de contrôle d'un système de radiocommunication mobile, de premières informations concernant l'urgence entre le terminal mobile et le poste de conduite de secours ; et
la communication (120), à travers un canal vocal du système de radiocommunication mobile, de deuxièmes informations concernant l'urgence entre le terminal mobile et le poste de conduite de secours,
les premières informations, à travers le canal de contrôle, entre le terminal mobile et le poste de conduite de secours étant communiquées avant la création du canal vocal, les premières informations étant enregistrées dans un système de gestion de données éloigné du terminal mobile comme du poste de conduite de secours, avant la création du canal vocal et le poste de conduite de secours récupérant les premières informations du système de gestion de données après la création du canal vocal,
les premières informations étant transmises du terminal mobile au poste de conduite de secours, comprenant en outre :
la vérification (218), par le poste de conduite de secours, de si les premières informations ont été transmises sans erreurs et
dans le cas d'une transmission sans erreur des premières informations, les deuxièmes informations étant communiquées sous forme vocale ; et
dans le cas d'une transmission erronée des premières informations, les deuxièmes informations comprenant un signal de demande, lequel est transmis du poste de conduite de secours au terminal mobile et est conçu pour amener le terminal mobile à transmettre de nouveau les premières informations à travers le canal vocal.

2. Procédé (100, 200) selon la revendication 1, dans lequel la communication (110) des premières informations à travers le canal de contrôle s'effectue avant la communication (120) des deuxièmes informations à travers le canal vocal.

3. Procédé (100, 200) selon l'une quelconque des revendications précédentes, dans lequel les premières informations sont transmises au moyen d'un service de messages courts (SMS).

4. Procédé (100, 200) selon l'une quelconque des revendications précédentes, dans lequel les premières informations comprennent au moins une des informations suivantes : coordonnées géographiques du lieu d'intervention, nombre de victimes de l'urgence, moment de l'urgence, numéro d'identification du prestataire de service et identificateur indiquant si l'appel d'urgence associé aux premières informations a été déclenché automatiquement ou manuellement.

5. Procédé (100, 200) selon l'une quelconque des revendications précédentes, dans lequel la communication (120) des deuxièmes informations comprend un codage et un décodage des deuxièmes informations selon un codec vocal.

6. Procédé (100, 200) selon l'une quelconque des revendications précédentes, dans lequel le système de radiocommunication mobile comprend le Système global de communications mobiles GSM.
